# EUROPEAN PATENT APPLICATION

(11) **EP 3 217 351 A1**
(43) Date of publication of application: **13.09.2017**
(21) Application number: 15857697.5
(22) Date of filing: 03.11.2015
(51) Int. Cl.: G06Q 50/16, G06Q 40/06

(54) **ASSET MANAGEMENT SYSTEM HAVING CONVERGENCE-TYPE PROFIT STRUCTURE BY LINKING REAL ESTATE AND MOVABLE ASSETS**

(30) Priority: 03.11.2014 KR 20140151497
(71) Applicant: Kim, Sookil, Yeonsu-gu, Incheon 21995 (KR); Kim, Hyungkeun, Yeonsu-gu, Incheon 21995 (KR)
(72) Inventor: CHOI, Raon, Seoul 06124 (KR); KIM, Saera, Busan 48515 (KR); KIM, Claire, Palatine, Illinois 60067 (US); KIM, Sookil, Incheon 21995 (KR); KIM, Hyungkeun, Incheon 21995 (KR)
(74) Representative: Vossius & Partner Patentanwälte Rechtsanwälte mbB
(86) International application number: PCT/KR2015/011669
(87) International publication number: WO 2016/072682

(57) **Abstract**

The present invention relates to an asset management system having a convergent profit structure in which real estate and movable property are linked. More specifically, the present invention can prevent unsold real estate, apply to an unsold real estate, The value of real estate that has already been sold can be raised substantially as well as the owner or lessee who owns the already sold real estate can earn the profit. In this way, the property value of the real estate is continuously increased through the circular profit structure and the asset management system having a convergent profit structure in which the assets are linked with the asset.

## Description

### [Technical field]

The present invention relates to an asset management system having a convergent profit structure in which real estate and movable property are linked. More specifically, the present invention can prevent unsold real estate, apply to an unsold real estate, The value of real estate that has already been sold can be raised substantially as well as the owner or lessee who owns the already sold real estate can earn the profit. In this way, the property value of the real estate is continuously increased through the circular profit structure and the asset management system having a convergent profit structure in which the assets are linked with the asset.

### [Background technology]

In the past, the sale and leasing of the real estate market has usually sold residential buildings such as "property real estate", such as apartments, villas, and office buildings, and commercial properties such as "profitable real estate". In such a case, "property real estate" may cause unsold apartment building due to difference in sale price and price between the floors which get enough sunny and the floors which get less. Thereby causing unsold units. In the case of a "profitable real estate" Unprecedent sale may occur due to the difference in the sale price and the price difference between the active and the non-active stores..

This is because not only the value of real estate as a commodity falls but also the risk of bankruptcy of construction companies due to the increase and pressure of the financial expenses of construction companies and construction companies.

In addition, the value of real estate, for example apartments, that have been sold in the past has fallen over time, and if commercial facilities are operating in the same area or operating in a larger scale, profitability deteriorates , There is a large loss such as closing the business.

Thus, for example, in the case of "joint purchase method by inducing purchase of unsold pre-sale real estate" such as Korean Patent Laid-Open No. 10-2014-0117213, the value of unsold pre-sale real estate is posted on a joint purchase site of unsold pre- And purchasing at a discounted price through joint

However, in the case of prior arts such as Korean Patent Laid-Open No. 10-2014-0117213, there is a problem that the investor can not substantially help induce unsold real estate to be purchased.

### [DETAILED DESCRIPTION OF THE INVENTION]

### [Technical Challenge]

### SUMMARY OF THE INVENTION

The present invention has been made to solve the above-mentioned problems occurring in the prior art.

It is an object of the present invention to provide a real estate management system capable of preventing undeveloped real estate from being sold and realizing unsold real estate by applying it to unsold real estate, Type asset management system.

Another object of the present invention is to provide a fusion type profit structure in which owner or lessee who owns a pre-existing real estate can earn a profit and real estate and a movable property in which the property value of the real estate continuously increases through a circulating profit structure And the like.

### [Technical Solution]

According to another aspect of the present invention, there is provided an asset management system having a convergent profit structure in which a real estate and a movable property are linked, the property management system comprising real estate information, equity information of a commercial facility subject to real estate, An operator terminal for establishing a database including lease information and operational information on sales status of commercial facilities; It is possible to search the real estate list of the commercial facilities that are subordinate to the real estate and the real estate through the database constructed by the operator terminal, and to allow the operator terminal to request a sale or lease for a specific real estate list on the real estate list, A real estate investor terminal capable of displaying profits according to a stake in a commercial facility; It is possible to search the list of commercial facilities for the commercial facilities through the database constructed by the operator terminal, to request the rental of the commercial facility from the list of commercial facilities at the operator terminal, A commercial facility tenant terminal that can be viewed; And a database constructed by an operator terminal. Based on the real estate list, the rental condition of the commercial facility is set based on the selling price of the real estate and the list of commercial facilities. A commercial facility selected through the property of a commercial facility subject to real estate and a commercial facility lessee terminal is constructed and stored as a database and the profit of a commercial facility subject to a specific property selected through a real estate investor terminal is distributed to the investor according to ownership Management means for paying a fixed income to a lessee of a particular commercial facility selected through a commercial facility tenant terminal; And the asset management system has a convergent profit structure in which the real estate and the movable property are linked.

Proceeds from commercial facilities subject to real estate may be structured to be paid to the owner of the property, or to a resident who resides in the property of the lessee, depending on the stake. A resident of a real estate may be constituted to receive a portion of the amount of the use of the commercial facility that is subject to the property. The management means is to evaluate the sales of the commercial facilities subject to the real estate and to provide the owner or the lessee of the property with the stock or certificate of profit of the company operating one or both of the operator terminal and management means, For example. A commercial facility can be composed of buildings that generate sales from among types of buildings used in the Enforcement Decree of the Building Act. The lessee of a commercial establishment may be constituted to bear the cost of installing the facility of the commercial establishment. The stakes of the commercial facilities subject to the real estate may be configured to vary in size depending on any one or more of the location, size, number of floors, or price of the real 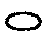 ud

### [Effects of the Invention]

According to the asset management system having a convergent profit structure in which real estate and movable property are linked according to an embodiment of the present invention, it is possible to prevent unsold real estate, apply it to unsold real estate, It is possible to substantially raise the value of the property of the real estate that has been sold.

In addition, the present invention has an effect that the property value of the real estate is continuously increased through the circulating profit structure by allowing the owner or the lessee who owns the already sold real estate to profit.

### [Brief Description of Drawings]

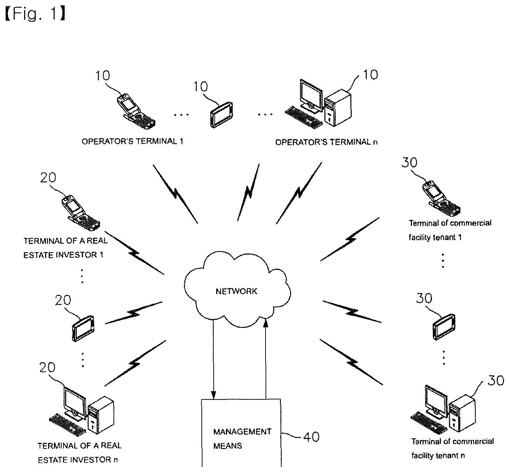

FIG. 1 is a block diagram of an asset management system having a convergent profit structure in which real estate and movable property are linked with each other according to an embodiment of the present invention.

### <Brief Description of Symbols>

10: Operator terminal 20: Real estate investor terminal
30: commercial facility lessee terminal 40: management means

### [Best Structure for Carrying Out the Invention]

The present invention can be regarded as a system in which real estate and movable property are linked by information technology to create (create) a convergent profit structure, that is, an ICTRE (Internet Communication Technology with Real Estate) system. However, these drawings are for illustrative purposes only, and the present invention is not limited thereto.

FIG. 1 is a block diagram of an asset management system having a convergent profit structure in which real estate and movable property are linked with each other according to an embodiment of the present invention.

Referring to FIG. 1, an asset management system having a convergent profit structure in which a real estate and a movable property are linked according to an embodiment of the present invention includes an operator terminal 10, a real estate investor terminal 20, a commercial facility tenant terminal 30) And management means (40).

The operator terminal 10 is a component that is constructed as a database including the real estate information, the equity information of the commercial facilities subject to the real estate, and the operating information on the ownership of the real estate and commercial facilities, the lease information, (E.g., a desktop computer, a mobile communication terminal (a mobile phone, a PDA, a notebook computer, etc.), etc.) can be used. Here, the commercial facilities subject to real estate are classified into three categories: the types of buildings used in the Enforcement Ordinance of the Building Act: single houses, apartment houses, first neighborhood living facilities, second neighborhood living facilities, cultural and meeting facilities, Transportation facilities, medical facilities, educational research facilities, aged facilities, training facilities, sports facilities, business facilities, accommodation facilities, amusement facilities, factories, warehouse facilities, dangerous goods storage and treatment facilities, automobile related facilities, animal and plant related facilities, resources Circulation-related facilities, correction and military facilities, broadcasting and communication facilities, power generation facilities, graveyard facilities, tourist rest facilities, and buildings that generate sales among funeral homes. For example, sales are generated in neighborhood facilities, resorts, motels, and hotels where sales are generated, such as supermarkets, bakeries, beauty salons, and congressmen, who are generally in close proximity to residential areas, And cultural and meeting facilities such as museums, art galleries, zoos, botanical gardens that do not correspond to neighborhood living facilities, and the like.

The operator terminal 10, together with the management means 40 described below, substantially manages and manages an asset management system having a convergent profit structure linked to a real estate according to an embodiment of the present invention, In the present invention, a mutual trust company capable of issuing a certificate of profit to secure the investment security for the investor is provided. In the present invention, the mutual trust company, the real estate agent, the legal person, the accountant, the bank, As an example.

The real estate investor terminal 20 is a commonly used terminal (such as a desktop computer or a mobile communication terminal) similar to the above-described operator terminal 10, and is an investor who invests in real estate, for example, a terminal operated by a real estate owner or a lessee. The real estate investor terminal 20 is capable of searching the real estate list of the commercial facility interest that is subordinate to the real estate and the real estate through the database established by the operator terminal 10, It is possible to ask for a sale or lease, and to inquire about the profits of the commercial facilities that depend on the specific real estate. At this time, in the present invention, the proceeds according to the equity are constructed so as to be paid to the owner of the real property and the resident who resides in the corresponding real estate of the real estate tenant, which is the fixed income of the commercial facility lessee described below, And the management and operation of an asset management system that has a convergent profit structure in which real estate and movable property are linked to real estate, In addition, residents living in real estate may receive a portion of the payment for the use of commercial facilities subject to real estate, which can be done through the use of an ID card or cell phone number used in the entire commercial facility or in the commercial facility. As a result, the owner of a real estate purchase has various contractual terms, such as a contract with a tenant who rents or rents his or her real estate, to lower the real estate rent, and to pay his or her own profits to the commercial facility.

The commercial facility tenant terminal 30 is also a commonly used terminal operated by a lessee who rents commercial facilities. The commercial facility tenant terminal 30 is capable of searching the commercial facility list for the commercial facility through the database established by the operator terminal 10, requesting the rental of the commercial facility to the operator terminal 10, The fixed income that will be paid when the tenant rents.

The management means 40 is a kind of server concept in which a subject who manages the operator terminal 10 (for example, a trust company or the like) or a user who operates the operator terminal 10 is operated by a separate manager Lt; / RTI & gt; The management means 40 stores a database constructed by the operator terminal 10, and based on the real estate list, the rental price of the commercial facility and the rental condition of the commercial facility, for example, The lessee does not pay the rent for the commercial facility but instead provides the same conditions as that of the commercial facility to pay the installation cost and receive the fixed income. Here, it is desirable that the interests of commercial facilities subject to real estate do not basically affect the sale price of real estate. In addition, the stakes of the commercial facilities subject to the real estate may be configured to be changed in size depending on any one or more of the location, size, number of floors, and price of the real estate. And commercial facilities that are subordinate to real estate are commercial facilities that are geographically related to real estate, such as apartment malls related to apartments, but depending on the situation, commercial facilities Commercial facilities where unsold pre-sale facilities have failed, etc.).

On the other hand, the commercial facilities subject to real estate are basically designated by the operating entity, ie, the trust company, but can be configured so that the investor can directly select the commercial facility according to the request of the investor (real estate owner).

In addition, the management means 40 constructs a database of a specific commercial facility selected through the commercial facility tenant terminal 30 and a stake of the commercial facility dependent on the specific real estate and the specific real estate selected through the real estate investor terminal 20 do. Then, the proceeds of the commercial facilities subject to the specific property selected through the real estate investor terminal 20 are distributed to the investor, especially the resident who resides in the real estate, according to the equity. Meanwhile, the management means 40 provides the fixed income to the lessee of the selected commercial facility through the commercial facility tenant terminal 30.

The entity that manages an asset management system having a convergent profit structure linked to real estate and movable property according to an embodiment of the present invention, namely a trust company, owns and manages real estate to be invested, (Real estate owner, real estate leaseholder) will be provided with a separate profit if certain conditions are met. For example, it is possible to evaluate the sales of the commercial facility at a certain period of time, and to either or both of the owner and the lessee of the real estate subordinate to the commercial facility depending on the evaluation result, either the operator terminal 10 or the management means 40 Or both of them, that is, the trust management company, such as a trust management company, or a certificate of profit.

In order to utilize an asset management system having a convergent profit structure in which a real estate (including a commercial facility) held by a separate trust company or a construction company is linked to a real estate according to an embodiment of the present invention, In the case of a contract with an operating system of an inventive system, for example, a trust company, it is presumed that a future profit will arise, and the owner or the owner of the property, such as a trust company or a construction company, It can be configured to provide stock of the system operating entity (such as a trust company) or a certificate of profit of a certain amount.

In the present invention, the management means 40, the operator terminal 10, the real estate investor terminal 20, the commercial facility tenant terminal 30, and the commercial facility tenant terminal 30 are connected via a network capable of bidirectional data communication using a communication protocol such as Internet Protocol (TCP / IP) Can be connected on a network capable of data communication. The network connecting the management means 40, the operator terminal 10, the real estate investor terminal 20 and the commercial facility tenant terminal 30 may be a wired or wireless Internet network, an intranet, a telephone network, a satellite communication network, One or two or more combinations or networks similar to these. However, it should be noted that not all items related to an asset management system having a convergent profit structure linked to a real estate and a movable property according to an embodiment of the present invention need to be made on a network, and specific data, for example, May be configured to be transmitted over the network.

Various databases and modules are used for the management means 40 so that an asset management system having a convergent profit structure in which a real property and a movable asset are linked according to an embodiment of the present invention can be utilized. For example, the Supreme Court internet registry sites may be interlocked with each other for services such as a map information database for checking the geographical position of a specific real estate, or a reading of a certified copy of a real estate registry.

### [DETAILED DESCRIPTION OF THE INVENTION]

Hereinafter, an asset management system having a convergent profit structure in which real estate and movable property are linked with each other according to an embodiment of the present invention will be described in detail with reference to the accompanying drawings.

First, the entity that manages the asset management system having a convergent profit structure linked with the real estate and the movable property according to the embodiment of the present invention, namely, the trust company, manages real estate (including commercial facilities) and commercial A database for the facility is constructed and stored in the management means 40. In other words, the real estate that he owns, for example, apartments and commercial facilities, for example, a part of apartment mall, is bundled together into a single real estate product and constructed as a database. In other words, when a single apartment is sold, it will be made into a commodity that sells together a 3.3 m² stake in a supermarket or beauty salon. At this time, 3.3 m² of a supermarket or a beauty salon should be paid free of charge without affecting the price of the apartment. If there is not enough real estate held by the trust company, the real estate owners can be registered as a member to provide or provide real estate listing information, and these real estate will be provided with the shares of commercial facilities owned by the trust company You can bundle them into products. In addition, the Trust Company builds and stores a database of commercial facilities for the lessee who wishes to rent their commercial facilities.

A person who wishes to rent a real estate, a person who wants to rent a real estate, or a person who wants to rent a commercial facility can receive management means 40 (40) through his or her terminal, i.e., a real estate investor terminal 20 or a commercial facility tenant terminal 30) To retrieve a list of commercial properties for a commercial real estate listing or a commercial facility for commercial real estate and real estate dependent equity interests.

If a specific real estate is selected from the real estate investor terminal 20 after the search, the management means 40 provides a sale price for the selected real estate. If a commercial facility tenant chooses a commercial facility from a list of commercial facilities through a commercial facility tenant terminal (30), the tenant condition of the commercial facility, that is, the lessee who rents the commercial facility, Provide the conditions to pay for installation of commercial facilities and receive fixed income.

Thereafter, when the selected property is traded, the property is transferred according to the normal real estate brokerage procedure, and the change in ownership of the property and the interest of the commercial facility subject to the property is stored in the database. At this time, in order to promote an asset management system having a convergent profit structure linked with a real estate and a movable property according to an embodiment of the present invention, the system is used to buy real estate, Enforcement You can pay the company's stock or certificate of profit.

If the owner owns and owns the real estate as such, the owner of the property can receive the proceeds from the commercial facility that is subordinate to his / her real estate. If the owner of the property owns the property, . For example, a buyer who has sold a share of 3.3 m² of a supermarket in an apartment receives a part of the commodity price he bought at the supermarket in a supermarket that the entire apartment he lives in is used. This can be done by using ID card or cell phone number when using supermarket. In addition, other stores other than the supermarket, for example, the first floor, the second floor, the third floor, such as the revenue generated by the business jointly distributed to receive the money may be received or returned. Here, a method of raising the sales of commercial facilities by giving a certain benefit (discount, etc.) in the form of the associate form of the system of the present invention to a person living in a nearby single or small-sized housing other than the direct party (owner, lessee) Can also be used. As a result, tenants who lease commercial facilities and residents who live in real estate can provide and provide high-quality services together with transactions of goods with high quality. At this time, the profits of the commercial facilities are distributed according to the stake with the remainder excluding the fixed income of the lessee who operates the commercial facility and the cost of the operating entity such as the trust company.

This is because a tenant leasing a commercial facility is in the position of a firm that is guaranteed a fixed income and can be called a "rental owner" because it has a fixed income like a person leasing a real estate. "This approach has the advantage that property owners can continue to earn revenues by indirectly operating commercial facilities, ie, as the sales of commercial facilities (supermarkets) rise, (Supermarket), the owner of the real estate (apartment) actively uses the commercial facility (the supermarket of the apartment shop).

This is advantageous for a tenant who operates a commercial facility (supermarket), ie, a commercial facility tenant. A commercial facility tenant who has borne the cost of commercial facility lease, ie, installation without the rent, Because they do not buy goods, they will have stable sales even if there is no advertisement or publicity, and stable income is guaranteed by avoiding anxiety of separate rent payment. Particularly, since the ownership of the supermarket owned by the owner of the real estate is a part thereof, the number of the owner of the real estate having the supermarket stake becomes a large number, so that the fixed amount of revenue can be received from the management means 40, . Of course, it is possible to lease a commercial facility tenant by varying the terms of the contract, such as receiving an incentive if the sales amount exceeds a certain amount.

In addition, the management means 40 evaluates the sales of commercial facilities (supermarkets) at predetermined intervals. This can be done through a separate evaluation agency. If the sales of the commercial facility (supermarket) becomes higher than the previous month, the previous quarter or the previous year according to the evaluation result, the owner of the real estate to which the supermarket is subordinated will be given a stock certificate or a certificate of profit of the trust company or the management company.

On the other hand, as described above, the owner who buys and owns the real estate may reside in person, but he or she may be allowed to live in a rented or leasehold tenant (real estate leaseholder). At this time, the present invention is based on the interests of the lessee in addition to the apartment owner (supermarket). In other words, a fixed income of more than a certain amount should be paid to the lessee of a commercial facility (supermarket), which can be easily achieved when the entire commercial facility (apartment house) is activated, Whether it will be more important. Therefore, the owner of a real estate (apartment) owns a stake in a commercial facility (supermarket) subject to it, but if the tenant (tenant) resides on behalf of the owner in renting or renting the apartment, Will receive the profits from the commercial facilities, receive the profits by returning part of the usage fee when using the commercial facility, and receive the stock certificate of the trust company or the certificate of profit according to the sales evaluation.

This creates a situation where the owner of a real estate purchase can contract with the lessee under various contract terms.

As such, the property owner or real estate leaseholder will be able to earn revenues due to the system of the invention, and such revenues can be invested for greater profits. For example, when investing in a venture that has been verified through an entity that manages the system of the present invention (such as a trust company), the verified product of the venture company is preferentially purchased by the owner or lessee of the property using the inventive system, The stock of a venture company is evaluated as rising, and the property of the owner or the lessee holding the stock of the venture company will continue to rise. In addition, the operating entity of the system of the present invention extends the system to another region and proceeds with business and continuously clusters. As a result, the revenue value of the operating company of the present invention system is continuously increased, It can rise continuously. Therefore, the value of property possessed by a property owner or a lessee applying the system of the present invention can be continuously increased. That is, the profit of the interest group (the owner, the lessee, the management company or the executing company) of the system of the present invention circulates and generates the profit continuously, thereby creating a so-called "circulating profit structure".

According to the embodiment of the present invention, the asset management system having a convergent profit structure in which real estate and movable property are linked can be applied to the real estate that is already pre-sold, It is a useful invention to create value by recycling apartments that have been completed and sold and whose value is consistent or declining.

In particular, in the case of an owner or a lessee who owns a real estate through an asset management system having a convergent profit structure linked to a real estate and a movable property according to an embodiment of the present invention, a small profit is initially obtained, And thus the property value of the real estate will be continuously increased as the stocks or the certificate of profit of the trust company are paid in addition to the profit obtained from the commercial facility itself.

As such, the rise and evaluation of the value of real estate as a bubble has been a great burden on the capitalist economy. However, realization of the real estate as goods with substantial value in accordance with the application of the system of the present invention will be of great help both nationally and globally.

Meanwhile, an asset management system having a convergent profit structure in which real estate and movable property are linked according to an embodiment of the present invention may be used as a separate system, for example, a distribution system of agricultural products, aquatic products, livestock products, Trading system, home shopping system and so on. For example, purchase of goods corresponding to capital expenditure excluding general consumer goods of neighboring living facilities, such as purchasing a car or a sofa, is also purchased using the accounting management field, which is one of the management systems of the present invention system, System revenue can be expanded.

As such, those skilled in the art will recognize that the invention can be embodied in other specific forms without departing from the spirit or essential characteristics thereof.

It is therefore to be understood that the embodiments described above are to be considered in all respects as illustrative and not restrictive and the scope of the invention is indicated by the appended claims rather than the foregoing description, It is to be understood that the invention is not limited to the disclosed embodiments, but, on the contrary, is intended to cover various modifications and equivalent arrangements included within the spirit and scope of the invention.

### [Industrial availability]

The present invention is industrially applicable to a server, a computer, and an Internet network.

## Claims

1. In an asset management system having a convergent profit structure in which real estate and movable property are linked,
An operator terminal configured to construct a database including real estate information, equity information of a commercial facility subject to the real estate, ownership of the real estate and the commercial facility, lease information, and operational information on sales status of the commercial facility;
The real estate list can be searched with respect to the real estate and the commercial facility belonging to the real estate through the database established by the operator terminal and the operator terminal can request the sale or lease of the specific real estate in the real estate list, A real estate investor terminal that is able to retrieve the proceeds of a stake in a commercial establishment subject to a particular property;
A list of commercial facilities for the commercial facility can be searched through a database established by the operator terminal, a request for rental of a specific commercial facility from the commercial facility list can be made to the operator terminal, A commercial facility tenant terminal that can display fixed income; And
A database constructed by the operator terminal is stored and the rental condition of the commercial facility is set based on the selling price of the real estate and the commercial facility list based on the real estate list, A commercial facility selected through the commercial facility tenant terminal, and a commercial facility dependent on the selected real estate and a specific real estate, as a database, and stores the profits of the commercial facilities subject to the specific property selected through the real estate investor terminal And a management means for distributing to the investors according to the shares and paying the fixed income to the lessee of the specific commercial facility selected through the commercial facility tenant terminal; and an asset management system having a convergent profit structure in which the real estate and the movable property are linked.

2. The method according to claim 1,
The proceeds of the commercial facilities subject to the above-
The property is paid to the owner of the real property and the lessee of the property according to the stake, and the resident who resides in the real estate.

3. The method of claim 2,
Wherein the resident who resides in the real estate has a portion of the amount of the fee for use of the commercial facility depending on the real estate, and the property management system has a convergent profit structure in which the real estate and the movable property are linked.

4. The method of claim 3,
The management means,
Evaluating the sales of the commercial facilities subject to the real estate and evaluating the sales of the property or profit certificate of the owner or the lessee of the property according to the result of the evaluation to the operator terminal, The asset management system having a convergent profit structure in which real estate and movable property are linked.

5. The method according to any one of claims 1 to 4,
The commercial facility,
An asset management system having a convergent profit structure in which real estate and movable property are linked, **characterized by** being a building in which sales are generated among the types of buildings used in the Enforcement Decree of the Building Act.

6. The method of claim 5,
Wherein the lessee of the commercial facility borrows the facility installation cost of the commercial facility, wherein the property management system has a convergent profit structure linked to the real estate and the movable property.

7. The method according to claim 6,
The shares of the commercial facilities subject to the above real estate,
Wherein the size of the real estate is changed according to one or more of the location, size, number of floors, and price of the real estate.
